# FASCICULE DE BREVET EUROPEEN

(11) **EP 2 185 296 B1**
(45) Date de publication et mention de la délivrance du brevet: **29.12.2010**
(21) Numéro de dépôt: 08827848.6
(22) Date de dépôt: 17.07.2008
(51) Int. Cl.: B07C 1/04, B65H 5/02, B65G 47/31

(54) **DISPOSITIF DE CONVOYAGE D'ENVOIS AVEC UN ASSERVISSEMENT SUR LE TAUX DE REJET**
ELEMENTFÖRDERVORRICHTUNG MIT VERWEIGERUNGSRATENSTEUERUNG
ITEM CONVEYING DEVICE WITH REFUSE RATE CONTROL

(30) Priorité: 02.08.2007 FR 0756895
(43) Date de publication de la demande: 19.05.2010
(73) Titulaire: Solystic, 94257 Gentilly Cedex (FR)
(72) Inventeur: AMBROISE, Stéphane, F - 26600 SERVES (FR)
(74) Mandataire: Prugneau, Philippe
(86) Numéro de dépôt international: PCT/FR2008/051344
(87) Numéro de publication internationale: WO 2009/024693

(56) Documents cités:
- EP-A- 0 818 406
- EP-A- 1 683 586
- US-A- 5 267 638
- US-A1- 2001 035 332
- US-A1- 2002 188 377
- US-A1- 2004 075 405
- US-A1- 2004 104 100

## Description

L'invention porte sur un dispositif de convoyage d'objets plats dans lequel les objets plats sont déplacés en série tout en étant séparés deux à deux d'un pas qui est normalement constant et dans lequel il est prévu un système de synchronisation pour compenser une variation de ce pas.

L'invention porte plus particulièrement sur un tel dispositif de convoyage qui est interposé entre un dépileur d'envois postaux et un carrousel à godets aiguillant les envois postaux vers des sorties de tri.

On connaît du brevet européen n°1214263 un tel dispositif de convoyage à bandes équipé d'un dispositif de synchronisation à roues élastiquement déformables entraînées en rotation à vitesse variable. Ce convoyeur est conçu pour déplacer des envois postaux allant de la simple lettre de moins de 1 mm d'épaisseur à l'envoi dit de grand format dont l'épaisseur peut aller jusqu'à 32 mm.

Les godets du carrousel se déplacent au-dessus de sorties de tri à une vitesse constante. Chaque godet est chargé avec un envoi qui provient du convoyeur.

Le dépileur est commandé par un signal de référence périodique dont la fréquence est alignée sur la fréquence de passage des godets devant l'extrémité libre du convoyeur.

Quand un envoi est dépilé en réponse à la détection d'un front du signal de référence, il passe d'abord dans le dispositif de synchronisation où il subit une phase d'accélération/décélération pour être amené à la vitesse des bandes du convoyeur. Il est ensuite pris en charge par les bandes du convoyeur pour être amené à vitesse constante vers le carrousel à godets. L'instant d'entrée de l'envoi dans le dispositif de synchronisation est détecté à partir d'un capteur de passage ce qui permet d'ajuster une courbe d'accélération de l'envoi dans le dispositif de synchronisation de telle façon à faire coïncider l'instant d'arrivée de l'envoi à l'extrémité du convoyeur avec l'instant de passage d'un godet vide destiné à recevoir l'envoi.

A l'extrémité du convoyeur, l'instant d'arrivée de l'envoi est contrôlé pour vérifier qu'il se présente ni trop en avance, ni trop en retard par rapport à la date prévue pour la coïncidence et dans le cas contraire, l'envoi est aiguillé vers une sortie de rejet en attendant d'être réintroduit en entrée du dépileur. En pratique, dans ce dispositif connu, la période avec laquelle les godets se présentent devant le convoyeur est de 333ms. La fenêtre temporelle de présentation d'un envoi face à un godet vide, de part et d'autre de la date de coïncidence est -15ms de retard et +20ms d'avance. En dehors de cette fenêtre temporelle, l'envoi n'est pas injecté dans un godet mais il est dévié vers la sortie de rejet.

On a constaté que pour les lots d'envois fortement mélangés, c'est-à-dire comprenant un large spectre d'envois allant des lettres aux objets plats dits « grands formats », on pouvait avoir un pourcentage important d'envois mis en rejet ce qui est de nature à affecter le débit de la machine.

On connait des documents EP1683586 et EP0818406 un dispositif de synchronisation dans lequel la vitesse des envois est adaptée en fonction de la détection de leur épaisseur ou de leur poids de sorte à obtenir un pas constant entre envois.

Le but de l'invention est de proposer un dispositif de convoyage amélioré.

L'invention est basée sur l'observation que le temps de transport des envois dans le convoyeur à bandes (qui fonctionne normalement à vitesse constante) dépend également de certaines caractéristiques physiques des envois. Un envoi de faible épaisseur par exemple (telle qu'une lettre) va plus vite qu'un envoi de plus grande épaisseur (tel qu'un grand format), un envoi sous enveloppe en matière plastique va plus vite qu'un envoi sous enveloppe en papier. La différence de temps de parcours entre les envois les plus lents et les envois les plus rapides peut être de l'ordre de quelques millisecondes. Ceci fait que le pas entre deux envois consécutifs (ayant des caractéristiques physiques différentes) peut largement varier au cours du déplacement de ces envois dans les bandes du convoyeur, et ce d'autant que le convoyeur s'étend sur une longueur importante. L'idée à la base de l'invention est donc de compenser ces variations de pas entre envois par un asservissement du dispositif de synchronisation en fonction du temps de retard ou d'avance mesuré par catégorie d'envois mis en rejet, chaque catégorie d'envoi correspondant à certaines caractéristiques physiques des envois.

A cet effet, l'invention a pour objet un dispositif de convoyage d'objets plats ayant une enveloppe extérieure en matière plastique ou en papier dans lequel les objets plats sont déplacés en série tout en étant séparés deux à deux par un pas qui est normalement constant et dans lequel il est prévu un système de synchronisation pour compenser une certaine variation de ce pas, caractérisé en ce qu'il comprend :
- un moyen pour détecter si l'enveloppe extérieure d'un objet courant est en matière plastique ou en papier et pour catégoriser l'envoi courant en deux classes correspondant respectivement à la classe des envois à enveloppe en plastique et la classe des envois à enveloppe en papier,
- un moyen pour relever une certaine variation du pas pour l'objet courant et pour enregistrer en mémoire un cumul de variation de pas en correspondance avec ladite classe de l'objet courant, et
- un moyen pour asservir le système de synchronisation à partir dudit cumul de variation de pas enregistré en mémoire en correspondance avec ladite classe de l'objet courant.

Dans un mode de réalisation particulier de l'invention, le dispositif de convoyage comprend un moyen pour mesurer l'épaisseur de l'objet courant, et dans lequel le moyen pour catégoriser est agencé pour catégoriser l'envoi courant en trois classes d'épaisseur.

En pratique, pour des envois postaux, ces caractéristiques physiques sont l'épaisseur de chaque envoi et/ou la nature plastique ou papier de l'enveloppe extérieure des envois. Mais on peut étendre le principe de l'invention à d'autres caractéristiques physiques des envois susceptibles d'influencer la vitesse de déplacement de ces envois dans un convoyeur à bandes telles que la hauteur, la longueur et le poids des envois.

L'invention sera encore mieux comprise à la lecture de la description qui suit d'un exemple de réalisation illustré sur le dessin.
La figure 1 illustre un dispositif de convoyage selon l'invention.
La figure 2 illustre par un organigramme le fonctionnement de l'asservissement selon l'invention.

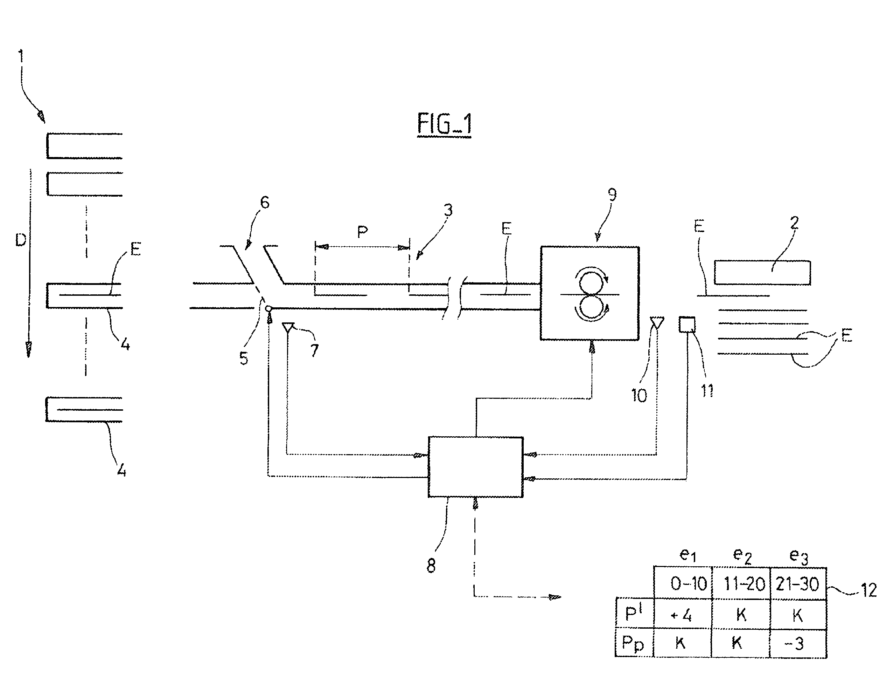

Sur la figure 1, on a représenté de façon très schématique en partie une machine de tri postale comprenant un carrousel à godets 1 alimenté par une ligne d'entrée comprenant un dépileur 2 qui sérialise des envois E stockés en pile dans un magasin de dépilage.

En sortie du dépileur, les envois E sont déplacés en série sur chant par un convoyeur à bandes 3 pour être injectés un par un dans les godets 4 successifs du carrousel 1 et pour être dirigés vers des sorties de tri de la machine (non représentées).

Pour des raisons de clarté, on n'a pas représenté sur la figure 1 l'installation de lecture automatique d'adresses postales qui sert à déterminer pour chaque envoi dépilé la sortie de tri correspondante à l'adresse reconnue automatiquement sur l'envoi.

Les godets 4 se déplacent à vitesse normalement constante selon une direction D perpendiculaire à l'extrémité du convoyeur 3, la différence entre l'instant de passage d'un godet devant le convoyeur 3 et l'instant de passage du godet suivant devant ce convoyeur est par exemple de 333ms.

Les envois E doivent donc être présentés un à un face à un godet vide 4 du carrousel 1 à une date qui coïncide avec le passage du godet 4 en question. On dispose toutefois d'une certaine fenêtre temporelle autour de cet instant de coïncidence, en avance ou en retard, par exemple -15ms de retard à +20 ms d'avance. Si l'envoi ne se présente pas dans cette fenêtre temporelle, il est dirigé à l'aide d'un déflecteur commandé 5 vers une sortie de rejet symbolisée par 6. La détection de l'instant de présentation d'un objet en extrémité du convoyeur 3 se fait à l'aide d'un capteur de passage 7 situé juste en amont du déflecteur 5. Le signal produit par le capteur 7 est envoyé à une unité de contrôle 8 qui actionne le déflecteur 5 le cas échéant.

Le dépileur 1 est commandé à partir d'un signal de commande synchrone avec la fréquence de passage des godets 4 devant le convoyeur 3 de sorte que les envois E se suivent en série dans le convoyeur 3 avec un pas P normalement constant entre deux envois consécutifs. Ce pas P est la distance entre le front avant de deux envois consécutifs comme illustré sur la figure 1.

Un dispositif de synchronisation 9 (par exemple à roues motorisées élastiquement déformables) est prévu en entrée du convoyeur 3 pour ajuster la vitesse de chaque envoi dépilé du dépileur 1 à la vitesse constante du convoyeur. En même temps, le dispositif de synchronisation 9 règle le pas entre envois consécutifs pour compenser une éventuelle variation du temps de dépilage des envois. Le dispositif de synchronisation est commandé par l'unité 8 qui agit sur la vitesse de rotation des roues déformables du dispositif 9.

Un capteur de passage 10 est disposé entre le dispositif de synchronisation 9 et le dépileur 2 pour détecter le passage du front avant de l'envoi courant dépilé et l'unité de contrôle 8, sur la base de ce signal, calcule la courbe de vitesse (accélération/décélération) que doit suivre l'envoi courant dans le dispositif de synchronisation pour que l'instant d'arrivée de l'envoi courant coïncide avec celui d'un godet du carrousel (la longueur du convoyeur 3 et la vitesse de convoyage étant des paramètres fixes).

Selon l'invention, on détermine un certains nombre des caractéristiques physiques des envois E dépilés par le dépileur 2 avant qu'ils franchissent le dispositif de synchronisation 9, par exemple la nature de l'enveloppe de l'envoi (papier/plastique) et l'épaisseur de l'envoi. Il existe des capteurs spécifiques pour relever ces deux caractéristiques physiques. On a représenté par le bloc 11 des capteurs aptes à mesurer l'épaisseur e de chaque envoi et à déterminer la nature papier/plastique de l'enveloppe de chaque envoi. Les signaux produits par les capteurs 11 sont fournis à l'unité de contrôle 8 pour catégoriser chaque envoi. En général ces capteurs 11 sont déjà disponibles dans un dépileur.

A tire d'exemple, on a représenté sur la figure 1 six catégories d'envois E regroupées dans une table 12 qui est maintenue en mémoire dans l'unité de contrôle 8. Les colonnes e1, e2 et e3 de cette table correspondent à trois intervalles différents pour l'épaisseur de l'envoi : 0 à 10 mm ; 11 à 20 mm et 21 à 30mm. Les lignes Pl et Pp de cette table correspondent à deux types d'enveloppe d'envoi : «plastique » ou « papier ». Concernant l'épaisseur, on pourrait prévoir plus de 3 colonnes pour augmenter le nombre de catégories d'envois à distinguer sans sortir du cadre de l'invention. Il est évident que cette table 12 peut devenir plus complexe si d'autres caractéristiques physiques des envois sont prises en compte (poids, hauteur, longueur). Par exemple, les catégories d'envois peuvent être complétées en tenant compte des caractéristiques physiques : hauteur et longueur. Dans ce cas, un nouvelle dimension peut être ajouté à la table 12. Les caractéristiques physiques hauteur et longueur sont particulièrement représentatives des variations de vitesse pour des machines dans lesquelles les envois postaux sont convoyés à plat. En conséquence les dimensions et les caractéristiques de la table 12 définissant les catégories d'envois peuvent être adaptées en fonction du type de machine de tri. Les caractéristiques physiques : épaisseur, hauteur, longueur et poids peuvent être combinées au type «plastique » ou « papier », se substituer les unes aux autres sans sortir de la porté de l'invention.

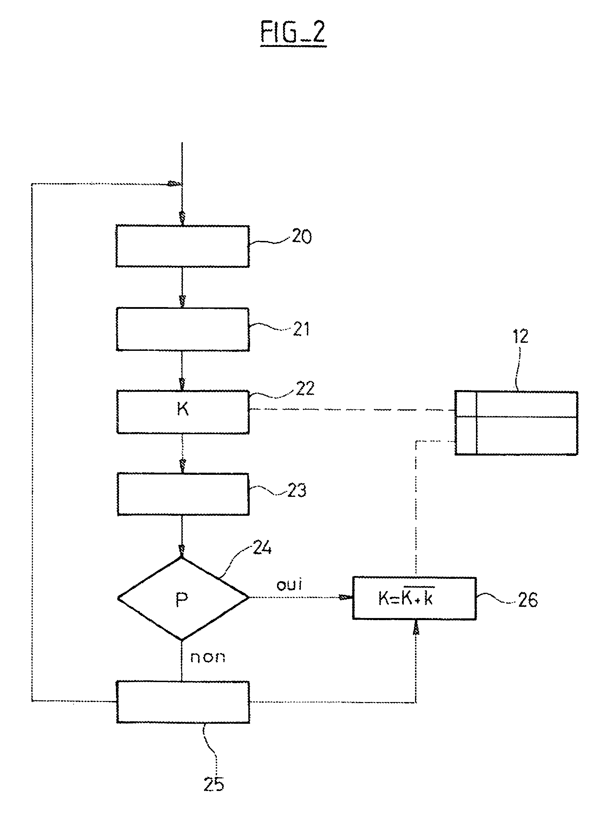

Le fonctionnement de l'unité de contrôle 8 est décrit en relation avec l'organigramme de la figure 2.

Un envoi courant E est dépilé en 20 par le dépileur 2. Les caractéristiques physiques (épaisseur, nature de l'enveloppe) de l'envoi sont relevées en 21 par les capteurs 11 et l'envoi est catégorisé dans l'unité 8 pour récupérer une valeur d'asservissement K dans la table 12 dans l'étape 22. Il faut comprendre qu'à l'initialisation de ce processus, toutes les valeurs K de la table 12 sont à zéro.

Cette valeur K d'asservissement récupérée de la table 12 est prise en compte (pour avancer ou retarder le déplacement de l'envoi) dans le calcul de la courbe de vitesse de l'envoi courant pour la commande du dispositif de synchronisation en 23. Par exemple, si K est égale à +4ms, cela signifie que pour cette catégorie d'envois, l'unité de contrôle 8 appliquera un retard de 4ms à la durée de déplacement de l'envoi dans le convoyeur 3.

L'envoi courant est déplacé par le convoyeur 3 et lors de son passage devant le capteur 7, l'unité 8 détermine en 24 si cet envoi est « hors du pas P», c'est-à-dire qu'il est trop en avance ou trop en retard par rapport à la date de coïncidence prévue. Si l'instant de présentation de l'envoi courant se situe dans la fenêtre temporelle de tolérance (l'envoi est « dans le pas P »), l'unité de contrôle 8 actionne le déflecteur 5 pour que l'envoi soit injecté dans un godet 4 du carrousel (étape 25) et le processus se poursuit pour un autre envoi à partir de l'étape 20.

Si maintenant à l'étape 24, l'instant de présentation de l'envoi courant se situe en dehors de la fenêtre temporelle (l'envoi est « hors pas P»), l'unité de contrôle 8 actionne le déflecteur 5 dans l'étape 25 pour diriger l'envoi vers la sortie de rejet 6. En même temps, l'unité 8 détermine dans l'étape 26 l'avance ou le retard k de cet envoi par rapport à la date prévue de coïncidence pour consolider la valeur d'asservissement K (calcul de la moyenne de K+k) dans la table 12 en correspondance avec la catégorie de l'envoi déterminée dans l'étape 21 et le processus se poursuit pour un autre envoi à partir de l'étape 20 pour un nouvel envoi courant.

Pour la gestion de la table 12 dans l'unité de contrôle 8, il est possible de prévoir qu'une valeur courante K est utilisée pour l'asservissement par l'unité 8 que si un nombre suffisant de consolidations ont été préalablement effectuées pour la catégorie d'envois correspondante. On peut prévoir que ce nombre de consolidations est différent d'une catégorie d'envois à l'autre. On peut aussi prévoir que l'asservissement ne se fasse pas d'une valeur de K mais de façon incrémentale jusqu'à arriver à la valeur K.

On a représenté deux exemples de valeurs de K dans la table 12 sur la figure 1. La valeur -3 indiquée pour la catégorie des envois à enveloppe papier et de plus forte épaisseur (les envois les plus lents dans le convoyeur 3) signifie que les envois relevant de cette catégorie seront affectés d'une avance de 3ms par le dispositif de synchronisation 9 par rapport à la date de coïncidence. La valeur +4 indiquée dans la table 12 pour la catégorie des envois à enveloppe en plastique et de moins de 10mm d'épaisseur (les envois les plus rapides) signifie que l'unité de contrôle 8 calculera une courbe de vitesse qui permettra de retarder de 4ms les envois de cette catégorie par rapport à la date de coïncidence.

Par conséquent, avec l'asservissement du dispositif de synchronisation selon l'invention, on utilise les envois orientés en rejet pour abaisser le taux de rejet pour les envois suivants. L'invention peut être mise en oeuvre facilement du fait que les capteurs de caractéristiques physiques des envois sont déjà largement présents sur les machines de tri postal.

## Revendications

1. Dispositif de convoyage d'objets plats ayant une enveloppe extérieure en matière plastique ou en papier dans lequel les objets plats (E) sont déplacés en série tout en étant séparés deux à deux par un pas (P) qui est normalement constant et dans lequel il est prévu un système de synchronisation (9) pour compenser une certaine variation de ce pas, **caractérisé en ce qu'**il comprend :
- un moyen (10,11) pour détecter si l'enveloppe extérieure d'un objet courant est en matière plastique ou en papier et pour catégoriser l'envoi courant en deux classes correspondant respectivement à la classe des envois à enveloppe en plastique et la classe des envois à enveloppe en papier,
- un moyen (7,8,12) pour relever une certaine variation du pas pour l'objet courant et pour enregistrer en mémoire un cumul de variation de pas en correspondance avec ladite classe de l'objet courant, et
- un moyen (8,12) pour asservir le système de synchronisation à partir dudit cumul de variation de pas enregistré en mémoire en correspondance avec ladite classe de l'objet courant.

2. Dispositif selon la revendication 1, comprenant un moyen pour mesurer l'épaisseur de l'objet courant, et dans lequel le moyen pour catégoriser est agencé pour catégoriser l'envoi courant en trois classes d'épaisseur.

3. Dispositif selon la revendication 1, comprenant un capteur pour mesurer la hauteur de l'objet courant, cette mesure servant pour catégoriser l'objet courant.

4. Dispositif selon la revendication 1, comprenant un capteur pour mesurer la longueur de l'objet courant, cette mesure servant pour catégoriser l'objet courant.

5. Dispositif selon la revendication 1, comprenant un capteur pour mesurer le poids de chaque objet courant, cette mesure servant pour catégoriser l'objet courant.

6. Machine de tri postal comprenant un dispositif de convoyage d'envois selon l'une des revendications 1 à 5 qui est interposé entre un dépileur (2) et un carrousel à godets (1).

## Claims

1. Device for conveying flat articles having an outer envelope made of a plastics material or of paper, in which device the flat articles (E) are moved in series while being at a pitch (P) one from the next that is normally constant, and in which device a synchronization device (9) is provided for compensating for a certain amount of variation in said pitch, said device being **characterized in that** it includes:
- means (10, 11) for detecting whether the outer envelope of a current article is made of a plastics material or of paper, and for categorizing the current mailpiece into one of two classes corresponding respectively to the class of mailpieces having envelopes made of plastic, and to the class of mailpieces having envelopes made of paper;
- means (7, 8, 12) for identifying a certain amount of variation in the pitch for the current article and for recording a cumulative pitch variation in a memory in correspondence with said class of the current article; and
- means (8, 12) for servocontrolling the synchronization system on the basis of said cumulative pitch variation recorded in the memory in correspondence with said class of the current article.

2. Device according to claim 1, including means for measuring the thickness of the current article, and in which the categorizer means are arranged so as to categorize the current mailpiece into one of three classes of thickness.

3. Device according to claim 1, including a sensor for measuring the height of the current article, this measurement serving to categorize the current article.

4. Device according to claim 1, including a sensor for measuring the length of the current article, this measurement serving to categorize the current article.

5. Device according to claim 1, including a sensor for measuring the weight of each current article, this measurement serving to categorize the current article.

6. A mail sorting machine including a mailpiece conveyor device according to any one of claims 1 to 5 that is interposed between an unstacker (2) and a bin carrousel (1).

## Patentansprüche

1. Vorrichtung zum Fördern von flachen Gegeständen mit einer äußeren Hülle aus Kunststoff oder Papier, bei dem die flachen Gegenstände (E) seriell unter Vereinzelung um einen Schritt (P), der üblicherweise konstant ist, verlagert werden, und bei dem ein Synchronisationssystem (9) zur Kompensation gewisser Variationen des Schritts vorgesehen ist,
**dadurch gekennzeichnet,**
**dass** es umfasst:
- Mittel (10, 11) zum Erfassen ob die äußere Hülle eines laufenden Gegenstandes aus Kunststoff oder Papier ist und um die laufende Sendung in zwei Klassen zu kategorisieren, nämlich die Klasse der Sendungen mit Kunststoff-Hülle und die Klasse der Sendungen mit Papier-Hülle,
- Mittel (7, 8, 12) zum Ermitteln einer gewissen Variation des Schritts für den laufenden Gegenstand und um in einem Speicher eine Häufung der Variationen des Schritts korrespondierend mit der Klasse des laufenden Gegenstands zu speichern, und
- Mittel (8, 12) zum Regeln des Synchronisationssystems ausgehend von der korrespondierend mit der Klasse des laufenden Gegenstandes in dem Speicher gespeicherten Häufung der Variation des Schritts.

2. Vorrichtung nach Anspruch 1, umfassend ein Mittel zum Messen der Dicke des laufenden Gegenstandes, und bei dem das Mitel zum Kategorisieren angeordnet ist um die laufende Sendung in drei Dickenklassen einzuteilen.

3. Vorrichtung nach Anspruch 1, umfassend einen Sensor zum Messen der Höhe des laufenden Gegenstandes, wobei diese Messung dazu dient, den laufenden Gegenstand zu kategorisieren.

4. Vorrichtung nach Anspruch 1, umfassend einen Sensor zum Messen der Länge des laufenden Gegenstandes, wobei diese Messung dazu dient, den laufenden Gegenstand zu kategorisieren.

5. Vorrichtung nach Anspruch 1, umfassend einen Sensor zum Messen des Gewichts jedes laufenden Gegenstandes, wobei diese Messung dazu dient, den laufenden Gegenstand zu kategorisieren.

6. Postsortiermaschine, umfassend eine zwischen einem Abstapler (2) und einem Becherkarussel (1) angeordnete Vorrichtung zum Fördern von Gegenständen nach einem der Ansprüche 1 bis 5.
